Europäisches Patentamt

European Patent Office

Office européen des brevets

(11) Numéro de publication: **0 493 563 B1**

(12) **FASCICULE DE BREVET EUROPEEN**

(45) Date de publication de fascicule du brevet: **25.01.95** (51) Int. Cl.⁶: **B60C 15/02**, B60C 5/16

(21) Numéro de dépôt: **91913035.1**

(22) Date de dépôt: **12.07.91**

(86) Numéro de dépôt internationale :
**PCT/FR91/00568**

(87) Numéro de publication internationale :
**WO 92/01576 (06.02.92 92/04)**

(54) **EMSEMBLE PNEUMATIOUE ET PROTECTEUR DE BOURRELET AMOVIBLE.**

(30) Priorité: **17.07.90 FR 9009212**

(43) Date de publication de la demande:
**08.07.92 Bulletin 92/28**

(45) Mention de la délivrance du brevet:
**25.01.95 Bulletin 95/04**

(84) Etats contractants désignés:
**AT BE CH DE DK ES FR GB IT LI LU NL SE**

(56) Documents cités:
**GB-A- 2 085 375**
**US-A- 4 108 232**

**PATENT ABSTRACTS OF JAPAN vol. 11, No. 111 (M-587)(2558) 08. Avril 1987, & JP A 61 257 304 (SUMITOMO RUBBER IND. LTD.) 14 Novembre 1986**

(73) Titulaire: **COMPAGNIE GENERALE DES ETA-BLISSEMENTS MICHELIN - MICHELIN & CIE**
**12, Cours Sablon**
**F-63040 Clermont-Ferrand Cédex (FR)**

(72) Inventeur: **DIERNAZ, Christian**
**21, route de Marsat**
**F-63200 Riom (FR)**

(74) Mandataire: **Devaux, Edmond-Yves et al**
**Michelin & Cie**
**Service SRK. Brevets**
**23, Place des Carmes**
**F-63040 Clermont-Ferrand Cédex (FR)**

Rank Xerox (UK) Business Services
(3.10/3.09/3.3.3)

## Description

La présente invention concerne les pneumatiques sans chambre à air indépendante destinés à être montés sur des jantes dont les sièges sont inclinés, par rapport a l'axe de rotation du pneumatique monté, d'un angle égal à 15°± 1° selon les normalisations en cours.

Un tel pneumatique a une armature de carcasse radiale, ancree dans chaque bourrelet à au moins une tringle, géneralement formée de fils à section rectangulaire. Axialement à l'extérieur de la partie retournée de l'armature de carcasse est disposée une nappe de fils ou câbles faisant avec la direction circonférentielle un angle d'environ 20°, cette nappe étant destinée à rigidifier la partie du bourrelet concernée.

Lors de la vie du pneumatique, les portions de caoutchouc en contact avec la jante s'usent par frottement, et d'autant plus que des particules étrangères sont souvent présentes entre le caoutcouc et le métal de la jante (sable, poussières...). En outre, ces portions sont soumises a un échauffement non négligeable, échauffement pouvant être tel que le caoutchouc directement en contact avec la jante durcit et se "bakélise". Lors du rechapage de la bande de roulement du pneumatique après un certain nombre de kilomètres effectués, ces portions de bourrelet endommagées peuvent être réparées avec apport de caoutchouc. Ces opérations de réparation sont compliquées, longues et coûteuses.

Le document JP-A-61-257304 montre un ensemble pneumatique formé d'un pneumatique et d'un coussin en caoutchouc intercalé entre la jante et le bourrelet du pneumatique.

Afin de remédier aux inconvénients cités ci-dessus, l'invention propose de remplacer le pneumatique se montant normalement sur la jante à sièges tronconiques 15° par un ensemble formé d'un pneumatique et d'un protecteur de bourrelet amovible renforcé, susceptible d'assurer un montage correct de l'enveloppe pneumatique, l'étanchéité nécessaire, et d'être remplacé aisément après dégradation en roulage.

Conformément a l'invention, l'ensemble pneumatique formé d'un pneumatique sans chambre à air, comprenant une bande de roulement, une armature de sommet, une armature de carcasse ancrée dans chaque bourrelet à au moins une tringle et d'un protecteur amovible, ensemble destiné à être monté sur une jante à sièges tronconiques à 15° de dimensions normalisees, caractérisé en ce que le protecteur amovible, destiné à s'insérer entre le bourrelet du pneumatique et la partie de jante composée du siège et du rebord de jante, est un anneau circulaire de caoutchouc renforcé, de largeur au moins égale à la largeur des sièges tronconiques de la jante et

- dont le profil radialement intérieur, vue en section méridienne, est identique au profil correspondant de la jante de service du pneumatique jusqu'au sommet du rebord de jante de diamètre $D_J$, mais dont les points les plus éloignés de l'axe de rotation du pneumatique sont sur un cercle de diamètre $D_B$, perpendiculaire à l'axe de rotation, et compris entre 0,9 et 1 fois le diamètre $D_J$ du rebord de jante,

- dont le profil radialement extérieur est composé d'une zone tronconique dont la génératrice est parallèle à la génératrice radialement intérieure, situee à une distance (e) de ladite génératrice, (e) étant compris entre 2 mm et 10 mm, et prolongée axialement à l'extérieur pour une zone en arc de cercle de rayon égal au rayon correspondant de la zone du profil intérieur, ladite zone en arc de cercle étant tangente à une zone tronconique dont la générative fait avec l'axe de rotation du pneumatique un angle $\beta$ compris entre 45° et 90°, zone tronconique elle même reliée au profil radialement intérieur par une zone sensiblement circulaire entourant au moins une nappe de fils ou câbles orientés par rapport à la direction circonférentielle d'un angle compris entre 90° et 45°, et formant deux couches de renforcement s'étendant au moins jusqu'à la pointe axialement intérieure du protecteur, après enroulement autour d'une tringle de module d'extension au moins égale à 4000 MPa et située dans la partie du protecteur amovible destiné à recouvrir le rebord de jante, tel que le rapport

$$S = \frac{D_J - D_B}{D_T - D_B}$$

soit au moins égal à 0,1, $D_T$ étant le diamètre intérieur de la tringle du protecteur amovible, et en ce que le pneumatique a des bourrelets dont la base de largeur axiale au plus égale à la largeur axiale du protecteur amovible est formée, vue en section méridienne, d'une zone tronconique dont la génératrice fait avec l'axe de rotation. du pneumatique un angle ($\gamma$) compris entre 15° et 25°, suivie axialement à l'extérieur d'un arc de cercle tangent à une deuxième zone tronconique dont la génératrice fait l'angle ($\beta$) avec l'axe de rotation du pneumatique.

Il faut entendre par tringle du protecteur amovible tout anneau circulaire, ayant une section transversale de forme quelconque et une composition quelconque, dans la mesure où cette composition présente un module d'extension au moins égal à 4000 MPa.

Cet anneau pourra être par exemple en toute matière plastique connue, mais pourra être aussi, comme les tringles habituelles, composé de plusieurs fils ou câbles assemblés, ou alors plusieurs fils ou câbles enrobés dans une matière plastique ou élastique et assemblés.

La section transversale est préférentiellement circulaire et la tringle du type tressé, c'est-à-dire formée de fils ou câbles enroulés autour d'une âme centrale qui peut être un fil ou un câble. L'avantage de ce type de tringle est de présenter une certaine extension sous effort, extension possible qui facilite le montage de la partie axialement extérieure du protecteur amovible sur le rebord de jante, tout en offrant une meilleure répartition des contraintes.

Le diamètre de la section transversale de la tringle est fonction de la résistance désirée, mais est choisi préférentiellement de manière à ce que la zone de jonction entre la génératrice d'angle ($\beta$) du profil radialement extérieur du protecteur et l'extrémité axialement intérieure du profil intérieur soit circulaire, avec la même épaisseur (e/2) autour de la tringle, enrobée circulairement de caoutchouc vulcanisé.

Les fils ou câbles de la nappe enroulée autour de la tringle du protecteur amovible peuvent être textiles ou métalliques. Ils sont préférentiellement textiles car moins conducteurs de la chaleur.

La description qui va suivre en regard du dessin annexé, donné à titre d'exemple, fera mieux comprendre comment l'invention est mise en oeuvre.

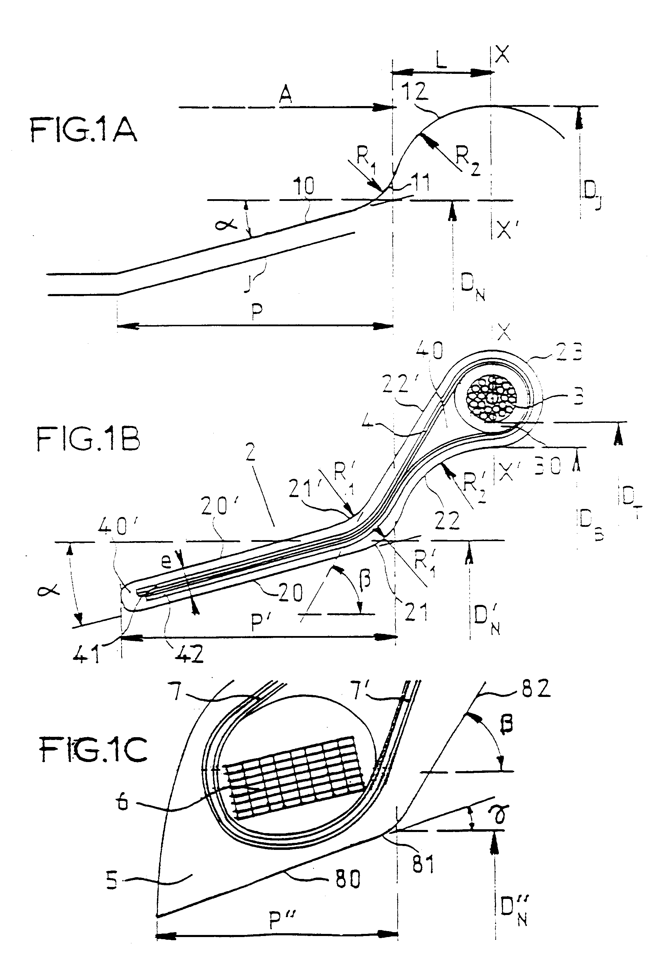

Sur ce dessin, les figures 1A, 1B, 1C représentent de manière séparée, chaque élément de l'ensemble : la jante à sièges coniques normalisée, le protecteur amovible, et le bourrelet du pneumatique.

La jante (J) de la figure 1A est une jante 22.5 x 9.00 normalisée, dont les contours et les dimensions se trouvent, par exemple, dans le livre de la "Tire and Rim Association". Cette jante (J) comprend principalement, en ce qui concerne l'invention, un siège (10) tronconique, la génératrice du tronc de cône faisant avec l'axe de rotation du pneumatique un angle ($\alpha$) de 15 ± 1°, et un rebord de jante (12) formé d'une portion circulaire de rayon $R_2$ (12,7 mm), reliée au siège tronconique (10) par une deuxième portion circulaire (11) de rayon $R_1$ (8 mm). Les largeurs de jante (A), du siège tronconique (P), ainsi que la distance (L) séparant axialement l'extrémité axialement extérieure du siège tronconique (10) du plan (XX') dans lequel est contenu le cercle, lieu des points du rebord de jante les plus éloignés de l'axe de rotation, sont normalisés. Le cercle ci-dessus a un diamètre $D_J$(597 mm), qui est le diamètre du rebord de jante (12).

Ce diamètre ($D_J$) du rebord de jante est supérieur d'une quantité $2R_2$ (25,4 mm) au diamètre $D_N$, diamètre nominal de la jante (J), égal à 571,5 mm.

Sur la figure 1B, montrant les contours, dimensions et structure du protecteur amovible (2) apparaissent les dimensions des profils radialement intérieur et extérieur du protecteur (2). Le profil radialement intérieur se compose d'une zone tronconique dont la génératrice (20) fait avec l'axe de rotation du pneumatique l'angle ($\alpha$) du siège tronconique (10) de la jante (J), c'est-à-dire à 15 ± 1°. La génératrice (20) est prolongée axialement à l'extérieur par un arc de cercle (21) de rayon ($R_1'$), identique au rayon ($R_1$) correspondant de la jante (J), lui-même prolongé d'un arc de cercle (22) de rayon ($R'_2$) identique au rayon ($R_2$) de la portion correspondante (12) de la jante (J). L'extrémité axialement extérieure de cette portion (22) se trouve dans le plan (XX') contenant le diamètre ($D_J$) du rebord de jante (12). Le profil radialement intérieur (20, 21, 22) du protecteur (2) est donc identique au profil (10, 11, 12) de la jante (J), mais il est globalement plus proche de l'axe de rotation d'une quantité

$$\frac{D_J - D_B}{2},$$

$D_B$ étant le diamètre du cercle, lieu des points de ce profil intérieur les plus éloignés de l'axe de rotation du pneumatique. Autrement dit, le profil intérieur (20, 21, 22) du protecteur (2) se déduit du profil (10, 11, 12) de la jante normalisée (J) par une translation radiale d'une quantité

$$\frac{D_J - D_B}{2}$$

vers l'axe de rotation. La largeur P' du protecteur amovible, mesurée comme étant la largeur de la zone tronconique du profil radialement intérieur est égale dans cet exemple à la largeur P du siège de la jante (J).

Quant au profil radialement extérieur (20', 21', 22') du protecteur (2), il se compose de la génératrice (20') parallèle à la génératrice (20) mais séparée de celle-ci de la distance e = 4 mm. La génératrice (20') est prolongée par l'arc de cercle (21') de rayon $R'_1$ de 8 mm. A cet arc de cercle (21') tangente la génératrice (22') qui fait avec l'axe de rotation un angle de 60°. Cette génératrice (22') est reliée à l'arc de cercle (22) du profil radialement intérieur (20, 21, 22) par une courbe (23), qui est, dans le cas étudié, un cercle.

Le protecteur amovible (2) est renforcé dans sa partie axialement extérieure d'une tringle (3) entourée d'un mélange d'enrobage (30). Cette tringle (3) est du type tressé et son diamètre intérieur $D_T$ est égal à 606 mm de sorte que le serrage (s) défini par le rapport décrit ci-dessus est égal à 0,18. Ce serrage, associé au fait que le profil intérieur du protecteur (2) a globalement un diamètre nominal ($D'_N$) inférieur au diamètre nominal ($D_N$) de la jante, de la quantité $D_J$-$D_B$, permet d'une part une mise en place facile du protecteur (2) sur la jante (J), mais aussi un maintien parfait de ce protecteur sur la jante (J). Autour de la tringle (3) est enroulée une nappe (4) de câbles de polyamide 1680 x 3. Ces fils font avec la direction circonférentielle un angle de 90°, et la nappe (4) donne naissance à deux couches (41) et (42) superposées l'une sur l'autre, renforçant en particulier la partie axialement intérieure au protecteur. Avant la superposition des deux couches (41) et (42), les deux brins de la nappe (4) sont séparés par un mélange de caoutchouc (40) ou bourrage. Le calandrage (40') de la nappe (4) est assymétrique, de manière à ce qu'il soit plus épais d'un côté que de l'autre, le côté le plus épais formant le gainage extérieur du protecteur (2). Dans le cas étudié, pour l'épaisseur globale (e) donnée, le calandrage à épaisseur faible est de 0,2 mm, la couche de fils a une épaisseur de 0,8 mm et le calandrage à épaisseur forte est de 1,0 mm.

Le rayon de la section transversale de la tringle (3), comme montré sur la figure 1B, est choisi tel que la courbe (23) reliant l'arc de cercle (22) du profil intérieur (20, 21, 22) à la génératrice tronconique (22') d'angle 60°, soit un cercle (23).

La figure 1c montre le bourrelet (5) du pneumatique destine a être monté sur la jante (J) munie de deux protecteurs amovibles (2). Ce bourrelet (5) contient une tringle (6) à fils rectangulaires, de section en forme de parallélogramme, et autour de laquelle vient s'enrouler l'armature de carcasse (7) pour former le retournement (7'). La base du bourrelet (5) de largeur P'' inférieure à P' et égale à 33 mm se compose de la zone tronconique (80) faisant avec l'axe de rotation l'angle γ égal à 20°, zone prolongée de l'arc de cercle (81), tangent à la zone tronconique (82) faisant l'angle (β) de 60° avec l'axe de rotation du pneumatique. Le diamètre nominal du bourrelet (5) ($D''_N$) est égal à ($D'_N$-e), ce qui permet un serrage efficace du bourrelet (5) sur le protecteur (2), et donc le maintien correct du pneumatique sur la jante munie de protecteurs, quelles que soient les conditions de roulage utilisées.

Si le pneumatique et le protecteur amovible (2) sont fabriqués séparément, ils peuvent par contre être montés sur la jante de service (J) soit séparément, soit ensemble. Dans le premier cas le pneumatique est mis en place après positionnement correct du protecteur amovible sur la jante (J). Dans le deuxième cas, le protecteur amovible (2) est dans une première opération collé à l'aide d'une dissolution à base de caoutchouc au bourrelet (5) du pneumatique, et l'ensemble pneumatique est alors monté sur la jante (J).

**Revendications**

1. Ensemble pneumatique formé d'un pneumatique sans chambre à air indépendante comprenant outre une bande de roulement et une armature de sommet, une armature de carcasse radiale (7) ancrée dans chaque bourrelet (5) à au moins une tringle (6) et d'un protecteur amovible (2), ensemble destiné à être monté sur une jante (J) à sièges (10) tronconiques à 15° et de dimensions normalisées, caractérisé en ce que le protecteur amovible (2), destiné à s'insérer entre le bourrelet (5) du pneumatique et la partie de la jante (J) composée du siège (10) et du rebord de jante (12), est un anneau circulaire de caoutchouc renforcé, de largeur P' au moins égale à la largeur (P) des sièges de jante (J),
   - dont le profil radialement intérieur (20, 21, 22), vu en section méridienne, est identique au profil correspondant (10, 11, 12) de la jante (J) de service du pneumatique jusqu'au sommet du rebord de jante de diamètre $D_J$, mais dont les points les plus éloignés de l'axe de rotation du pneumatique sont sur un cercle de diamètre ($D_B$), perpendiculaire à l'axe de rotation, et compris entre 0,9 et 1 fois le diamètre ($D_J$) du rebord de jante,
   - dont le profil radialement extérieur (20', 21', 22') est composé d'une zone tronconique (20') dont la génératrice est parallèle à là génératrice (20) radialement intérieure, située à une distance (e) de ladite génératrice (20), (e) étant compris entre 2 mm et 10 mm, et prolongée axialement à l'extérieur par une zone (21') en arc de cercle de rayon égal au rayon ($R'_1$) correspondant de la zone (21) du profil intérieur, ladite zone (21') étant tangente à une zone (22') tronconique dont la génératrice fait avec l'axe de rotation un angle (β) compris entre 45° et 90°, la zone (22') étant reliée au profil radialement intérieur (20, 21, 22) par une zone (23) sensiblement circulaire, entourant au moins une nappe (4) de fils ou câbles orientés par rapport à la direction circonférentielle d'un angle compris entre 90° et 45°, et formant deux couches (41, 42) de renforcement s'étendant jusqu'à la pointe axialement intérieure du protecteur (2), après enroulement autour d'une tringle (3) de module d'extension au moins égal à 4000 MPa et située dans la partie du protecteur amovible destiné à recouvrir le rebord de jante, tel que le rapport

$$s = \frac{D_J - D_B}{D_T - D_J}$$

soit au moins égal à 0,1 $D_T$ étant le diamètre intérieur de la tringle du protecteur amovible.

- et en ce que le pneumatique a des bourrelets (5) dont la base, de largeur axiale (P'') au plus égale à la largeur axiale (P') du protecteur amovible (2) est formée d'une zone tronconique (80) dont la génératrice fait avec l'axe de rotation du pneumatique un angle ($\gamma$) compris entre 15° et 25°, suivie axialement à l'extérieur d'un arc de cercle (81) tangent à une deuxième zone tronconique (82) dont la génératrice fait l'angle ($\beta$) avec l'axe de rotation.

2. Protecteur amovible faisant partie d'un ensemble selon la revendication 1, caractérisé en ce que la tringle (3) est une tringle de section circulaire et de type tressé.

3. Protecteur selon la revendication 2, caractérisé en ce que la tringle (3) a une section transversale dont le rayon est tel que la zone de jonction (23) entre les profils radialement intérieur et extérieur soit circulaire.

4. Protecteur selon l'une des revendications 2 à 3, caractérisé en ce que la nappe (4) est formée de câbles en polyamide.

**Claims**

1. A tyre assembly formed of a tyre without independent inner tube, comprising, in addition to a tread and a tread reinforcement, a radial carcass reinforcement (7) anchored in each bead (5) on at least one bead ring (6), and a removable protector (2), which assembly is intended to be mounted on a rim (J) with 15° frustoconical seats (10) and standard dimensions, characterised in that the removable protector (2) which is intended to be inserted between the bead (5) of the tyre and the part of the rim (J) formed of the seat (10) and the rim flange (12) is a circular ring of reinforced rubber, of a width (P'') at least equal to the width (P) of the rim seats (J),

- the radially inner profile (20, 21, 22) of which, viewed in meridian section, is identical to the corresponding profile (10, 11, 12) of the service rim (J) of the tyre up to the top of the rim flange of diameter $D_J$, but the points of which furthest from the axis of rotation of the tyre are on a circle of diameter ($D_B$) perpendicular to the axis of rotation, which is between 0.9 and 1 times the diameter ($D_J$) of the rim flange,
- the radially outer profile (20', 21', 22') of which is formed of a frustoconical zone (20') the generatrix of which is parallel to the radially inner generatrix (20), located at a distance (e) from said generatrix (20), (e) being between 2 mm and 10 mm, and extended axially towards the outside by a zone (21') in the form of a circular arc having a radius equal to the corresponding radius ($R'_1$) of the zone (21) of the inner profile, said zone (21') being tangent to a frustoconical zone (22') the generatrix of which forms an angle ($\beta$) of between 45° and 90° with the axis of rotation, the zone (22') being connected to the radially inner profile (20, 21, 22) by a substantially circular zone (23) surrounding at least one ply (4) of cords or cables which are oriented at an angle of between 90° and 45° with respect to the circumferential direction and forming two reinforcement layers (41, 42) extending up to the axially inner point of the protector (2), after winding around a bead ring (3) of a modulus of extension at least equal to 4000 MPa, located in the part of the removable protector intended to cover the rim flange, such that the ratio

$$S = \frac{D_J - D_B}{D_T - D_B}$$

is at least equal to 0.1, $D_T$ being the inner diameter of the bead ring of the removable protector,

- and in that the tyre has beads (5) the base of which has an axial width (P'') at most equal to the axial width (P') of the removable protector (2) is formed by a frustoconical zone (80), the generatrix of which forms an angle ($\gamma$) of between 15° and 25° with the axis of rotation of the tyre, followed axially towards the outside by a circular arc (81) at a tangent to a second frustoconical zone (82), the generatrix of which forms the angle ($\beta$) with the axis of rotation.

2. A removable protector forming part of an assembly according to Claim 1, characterised in that the bead ring (3) is a bead ring of circular cross-section and of braided type.

3. A protector according to Claim 2, characterised in that the bead ring (3) has a cross-section the radius of which is such that the junction zone (23) between the radially inner and outer profiles is circular.

4. A protector according to one of Claims 2 to 3, characterised in that the ply (4) is formed of polyamide cables.

**Patentansprüche**

1. Luftreifeneinrichtung aus einem schlauchlosen Luftreifen, der außer einer Lauffläche und einer Oberseitenarmierung eine radiale Karkassenarmierung (7) aufweist, die in jedem Wulst (5) mit wenigstens einem Wulstkern (7) verankert ist, und einem austauschbaren Wulstschützer (2), die dazu bestimmt ist, aus einer Felge (J) mit 15°-kegelförmigen Sitzen (10) und standardisierten Maßen montiert zu werden, **dadurch gekennzeichnet, daß** der austauschbare Wulstschützer (2), der dazu bestimmt ist, zwischen den Wulst (5) des Luftreifens und den aus Sitz (10) und Kante (12) der Felge bestehenden Bereich der Felge (J) eingefügt zu werden, ein kreisförmiger Ring aus verstärktem Gummi mit einer Breite P' ist, die wenigstens gleich der Breite (P) der Sitze der Felge (J) ist,

    - dessen radial innere Kontur (20, 21, 22) in axialem Querschnitt mit der entsprechenden Kontur (10, 11, 12) der Arbeitsfelge (J) des Luftreifens bis zur Oberseite der Felgenkante mit Durchmesser $D_J$ identisch ist, deren am weitesten von der Drehachse des Luftreifens entfernte Punkte sich jedoch auf einem zur Drehachse senkrechten Kreis mit Durchmesser ($D_B$) befinden, der zwischen dem 0,9fachen und dem 1fachen des Durchmessers ($D_J$) der Felgenkante liegt,

    - dessen radial äußere Kontur (20', 21', 22') aus einem kegelförmigen Abschnitt (20') besteht, dessen Umhüllende parallel zur radial inneren Umhüllenden (20) in einem Abstand (e) von dieser verläuft, wobei (e) zwischen 2 mm und 10 mm liegt, und die axial nach außen durch einen kreisbogenförmigen Abschnitt (21') verlängert ist, dessen Radius gleich dem entsprechenden Radius ($R'_1$) des Abschnitts (21) der inneren Kontur ist, wobei der Abschnitt (21') einen kegelförmigen Abschnitt (22') als Tangente hat, dessen Umhüllende mit der Drehachse einen Winkel ($\beta$) bildet, der zwischen 45° und 90° liegt, wobei der Abschnitt (22') mit der radial inneren Kontur (20, 21, 22) durch einen im wesentlichen kreisförmigen Abschnitt (23) verbunden ist, der wenigstens eine Lage (4) von Fäden oder Drähten umgibt, die bezüglich der Umfangsrichtung unter einem zwischen 90° und 45° liegenden Winkel orientiert sind und zwei Verstärkungsschichten (41, 42) bilden, die sich bis zur axial inneren Spitze des Wulstschützers (2) erstrecken, nachdem sie einen Wulstkern (3) mit einem Dehnungsmodul von mindestens 4000 Mpa umrundet haben, der in dem Bereich des austauschbaren Wulstschützers angeordnet ist, der dazu bestimmt ist, die Felgenkante abzudecken, wobei das Verhältnis

$$ S = \frac{D_J - D_B}{D_T - D_J} $$

wenigstens gleich 0,1 ist und $D_T$ der Innendurchmesser des Wulstkerns des austauschbaren Wulstschützers ist,

    - und daß der Luftreifen Wülste (5) hat, deren Basis mit einer axialen Breite (P'') wenigstens gleich der axialen Breite (P') des austauschbaren Wulstschützers (2) gebildet ist aus einem kegelförmigen Abschnitt (80), dessen Umhüllende mit der Drehachse des Luftreifens einen Winkel ($\gamma$) zwischen 15° und 25° bildet, axial nach außen gefolgt von einem Kreisbogen (81), der einen zweiten kegelförmigen Bereich (82) als Tangente hat, dessen Umhüllende mit der Drehachse den Winkel ($\beta$) bildet.

2. Anstauschbarer Wulstschützer, der Teil einer Einrichtung nach Anspruch 1 ist, dadurch gekennzeichnet, daß der Wulstkern (3) ein geflochtener Wulstkern von kreisförmigem Querschnitt ist.

3. Wulstschützer nach Anspruch 2, dadurch gekennzeichnet, daß der Wulstkern (3) einen Querschnitt mit einem solchen Radius hat, daß der Verbindungsabschnitt (23) zwischen der radial inneren und der radial äußeren Kontur kreisförmig ist.

4. Wulstschützer nach einem der Ansprüche 2 bis 3, dadurch gekennzeichnet, daß die Lage (4) aus Polyamiddrähten gebildet ist.

FIG.1A

FIG.1B

FIG.1C